# EUROPEAN PATENT SPECIFICATION

(11) **EP 2 141 486 B1**
(45) Date of publication and mention of the grant of the patent: **24.09.2014**
(21) Application number: 07870224.8
(22) Date of filing: 28.12.2007
(51) Int. Cl.: G01N 21/86, G01N 21/89, B65H 26/02, B21C 51/00

(54) **DEVICE FOR DETECTING AND CLASSIFYING RESIDUAL OXIDE IN METAL SHEET PRODUCTION LINES**
VORRICHTUNG ZUM NACHWEIS UND ZUR KLASSIFIZIERUNG VON OXIDRESTEN IN METALLFOLIEN-FERTIGUNGSSTRASSEN
DISPOSITIF POUR LA DÉTECTION ET LA CLASSIFICATION D'OXYDE RÉSIDUEL DANS DES CHAÎNES DE PRODUCTION DE STRATIFIÉS MÉTALLIQUES

(30) Priority: 02.04.2007 ES 200700865
(43) Date of publication of application: 06.01.2010
(73) Proprietor: Acerinox, S.A., 11370 Los Barrios-Cadiz (ES)
(72) Inventor: GONZALEZ SPINOLA, Carlos, E-11370 Los Barrios-Cadiz (ES); GARCIA VACAS, Francisco, E-11370 Los Barrios-Cadiz (ES); MARTIN VAZQUEZ, Manuel, Jesus, E-11370 Los Barrios Cadiz (ES); VIZOSO LAPORTE, Julio, E-11370 Los Barrios-Cadiz (ES); ESPEJO MEANA, Servando, E-11370 Los Barrios-Cadiz (ES); CAÑERO NIETO, Juan, Miguel, E-11370 Los Barrios-Cadiz (ES); MORILLAS CASTILLO, Sergio, E-11370 Los Barrios-Cadiz (ES); GUINEA DIAZ, Domingo, E-11370 Los Barrios-Cadiz (ES); VILLANUEVA MARTINEZ, Eugenio, E-11370 Los Barrios-Cadiz (ES); MARTIN GOMEZ, David, E-11370 Los Barrios-Cadiz (ES); BONELO SANCHEZ, José Maria, D., 11370 Los Barrios(Cadiz) (ES)
(74) Representative: PROPI, S.L.
(86) International application number: PCT/ES2007/000768
(87) International publication number: WO 2008/119845

(56) References cited:
- WO-A1-02/101366
- FR-A1- 2 809 642
- JP-A- H0 431 755
- JP-A- 08 271 440
- JP-A- 63 106 265
- JP-A- H04 316 664
- JP-A- S54 128 362
- US-B1- 6 259 109
- US-B1- 6 566 670

## Description

### OBJECT OF THE INVENTION

The present invention relates to an optical device specially designed for the fully automated detection of residual oxide stains (residual scale) as well as for the classification thereof in metal sheet production lines.

The object of the invention is to provide a device that makes it possible to monitor the quality of this kind of surfaces by using an automatic optical system that moves over the material in order to detect and classify said oxide stains, which are difficult to see at first glance in the production line.

Therefore, the invention falls within the sphere of the iron and steel industry and the manufacture of steels and metal materials with rough and highly reflective surfaces, and can be installed at the end of the surface stripping or cleaning process in order to carry out said surface inspection with no need to stop the line.

### BACKGROUND OF THE INVENTION

In the domain of practical application of the invention, the surface quality control of metal sheets for the detection of small oxide stains on said surfaces, the operator normally uses a magnifying glass to thoroughly inspect the surface of every sheet, momentarily stopping the production line with the obvious ensuing problems and drawbacks.

This task, on being carried out by an operator, may not be as efficient as it should, as the highly reflective nature and roughness of the surface complicates inspection thereof due to the fact that the shine can hide the residual oxide or that the shade of the superficial granulation itself can be mistaken for oxide.

Due to the time required to carry out this process, the quality of said surfaces is verified in a random manner, with scarce sampling, due to the fact that, as mentioned earlier, the production line must be stopped during inspection.

With the object of obviating this problem, Patent US 6.259.109 is known to use a camera to acquire and process a web moving along a production line. However, this system has been envisaged to fully acquire the band to be inspected using a linear camera, i.e. it does not move sideways but rather is synchronised using an encoder that indicates line speed, in such a manner that shooting speed is synchronised therewith.

Additionally, the lighting system must be constant.

Although this device perfectly fulfils the function for which it has been envisaged, it has a series of considerable limitations when the volume of sheets to be inspected is high, as in the case of this invention, wherein the image processing and storage capacity required to install such a system would be economically unfeasible. In this regard, around 44 GB of storage space per day would be required and storage during one month would require 1.2 TB.

Devices with similar characteristics are disclosed in patent JP 63106265**,** which differs substantially from the present invention in that it is intended to store an image, for representation on a screen, wherein said defect has previously been detected, i.e. its purpose is not the detection of defects through image capturing, but rather that of enabling analysis thereof once captured.

In WO 02101366 a method and a corresponding device provide online characterisation of a moving surface on the basis of microscopic images and pyrometric measurements.

The applicant is unaware of the existence of any system that allows an automatic **statistical** inspection to be carried out on the surface of a metal sheet, for the purpose of detecting and classifying the existence of residual oxide on highly reflective metal surfaces, and which can be installed in a production line without stopping it.

### DESCRIPTION OF THE INVENTION

The Device for the detection and classification of residual oxide in metal sheet production lines proposed by the invention satisfactorily solves the previously described problems in the different mentioned aspects, allowing the automatic detection of oxide stains around 50 µm in size, by means of statistical sampling in accordance with claim 1.

To this end, the invention consists of an optical system that incorporates at least one high-resolution camera, aided by strobe light sources and a light-diffusing screen, all of which are hermetically assembled in a box attached to a support carriage movable over the surface wherethrough the metal sheets pass in the production line, in addition to vertically, wherein the movement of said carriage is monitored by a programmable automaton (PLC).

Therefore, the programmable automaton is in charge of moving the camera over a zone of the sheet surface to be examined which, given the nature of the oxide stains to be examined, which appear distributed with certain intensity, examination of 100% of the sheet is not required, a statistical sampling being sufficient, in such a manner that, on the basis of sheet movement speed and the synchronised sideways movement of the slide bar, a zigzag sampling of the sheet surface is achieved, which is sufficient for determining the number of stains per unit area of surface.

The camera video signal is transferred to a PC via an image acquisition card, in such a manner that every image obtained is processed and the residual scale found is detected, quantified and classified in said PC, using specific programming software. Consequently, acquisition or line speed is not monitored by the video camera, but rather by the processing software, once it has finished processing the previous image.

Likewise, lighting intensity is not constant over time but rather is generated by strobe lights, as mentioned earlier, which are triggered by the end of processing of the preceding image.

Therefore, the system alerts of the inadequacy of the surface stripping or cleaning system, on the basis of the level of residual scale detected.

### DESCRIPTION OF THE DRAWINGS

For the purpose of complementing this description and helping to better understand the characteristics of the invention, in accordance with a preferred example of practical embodiment thereof, a set of drawings has been included as an integral part of this description, wherein the following figures have been represented in an illustrative but non-limiting manner:

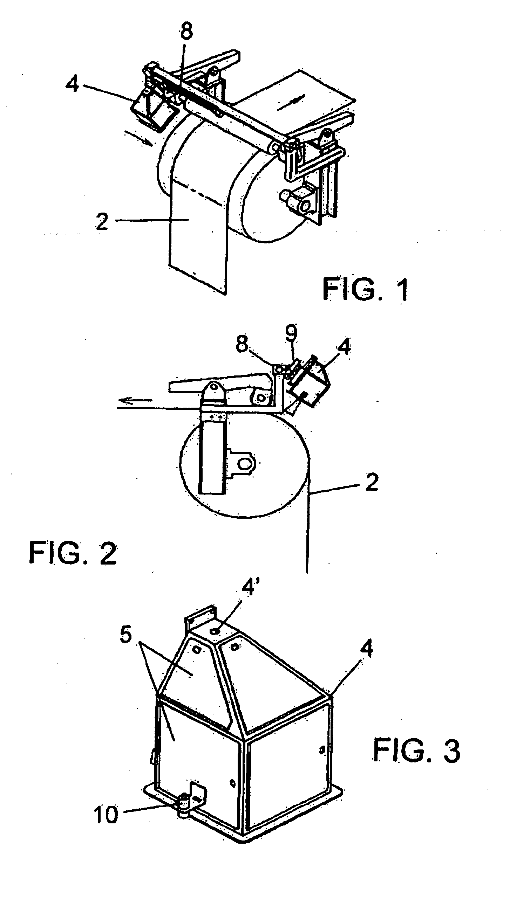

Figure 1.- Shows a perspective view of a device for the detection and classification of residual oxide in metal sheet production lines, manufactured in accordance with the object of the invention, where it appears duly installed in the production line.
Figure 2.- Shows a profile view of the device in figure 1.
Figure 3 - Shows a perspective view of the box, wherein the optical and lighting elements that participate in the device of the invention are included.
Figure 4.- Shows a profile view of the box of figure 3 without its sealing panels.
Figures 5 and 6.- Show respective perspective views of the slide bars for the horizontal and vertical movement of the box of figures 3 and 4.
Figure 7.- Finally shows a wiring diagram wherein the relationship between the different electronic components that participate in the device of the invention can be seen.

### PREFERRED EMBODIMENT OF THE INVENTION

In light of the described figures, it can be seen how a CCD camera (1), with a resolution in the plane of the object or steel sheet (2) of at least 40 pixels/mm, participates in the proposed device for the detection and classification of residual oxide in metal sheet production lines, so that every pixel has an object size of 25 µm in such a manner that, using programming software installed on a PC (3) related to said camera (1) as will be seen later, it is capable of detecting stains with a minimum size of 50 µm, i.e. that occupy at least 2x2 pixels, in order to ensure a sufficiently reliable detection algorithm.

Said CCD camera (1) is arranged inside a box or framework (4), hermetically sealed, the interior of which can be accessed through practicable panels (5). In the chosen example of embodiment the box has a quadrangular prismatic configuration, the upper base of which extends along a truncated cone-shaped surface, although this configuration is merely illustrative, as said box may adopt different configurations without affecting the essentiality of the invention.

A pair of high-power strobe lights (6) are also arranged inside said box or framework (4), in addition to a diffusion surface (7) for diffusing the light generated by said lights (6), in order to avoid the formation of shadows on the surface to be examined. A window wherein a glass is arranged wherethrough the camera (1) captures the images of the metal sheet (2) surface to be examined is established on the base of said framework (4).

Said box will preferably be hermetically sealed, as mentioned earlier, to prevent dust and dirt from entering it, and will have an exit (4') for the cables of the different electrical and electronic elements included therein.

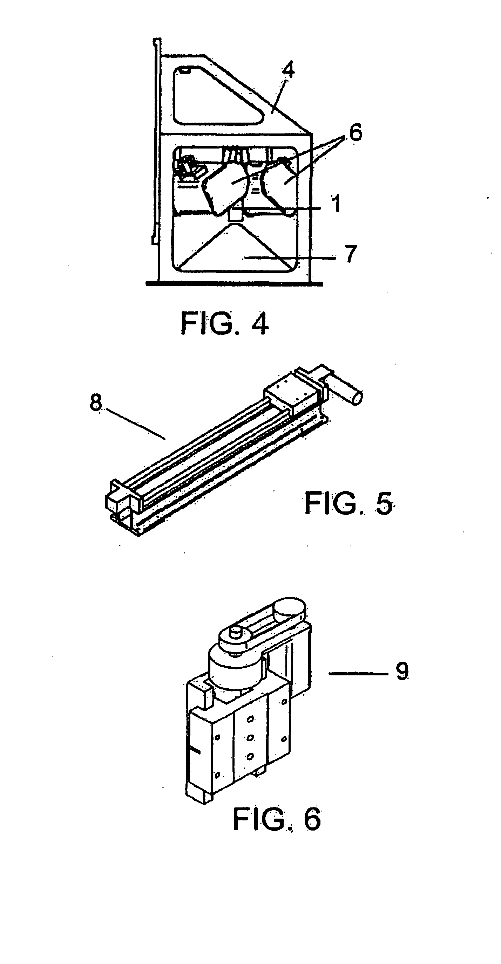

The framework or box (4) is fixed to a slide bar (8), as shown in figure 5, equipped with a motor that allows it to move horizontally, sideways to the forward movement of the steel sheets (2), in addition to a carriage (9) capable of moving said box (4) in a vertical direction.

The sideways movement of the box (4), and therefore of the camera associated thereto, together with the movement in the advance direction of the steel sheets (2), allow the device to capture a sufficiently random sampling surface so as to ensure the high quality of the measurements made.

Optionally, if a larger sampling surface is desired, two or more boxes (4) may be arranged on each slide bar (8).

Said carriage (9) is complemented by an ultrasound sensor (10) which allows the device to distinguish between different steel sheet thicknesses, in order to modify the vertical distance of the box (4) and therefore of the camera (1) with respect to the sheet surface to be examined, in such a manner that the camera is at the same distance from said surface at all times, and therefore at the same focal distance, avoiding the need for arranging self-focusing systems which, while being an equivalent solution that could be adopted, require a longer response time.

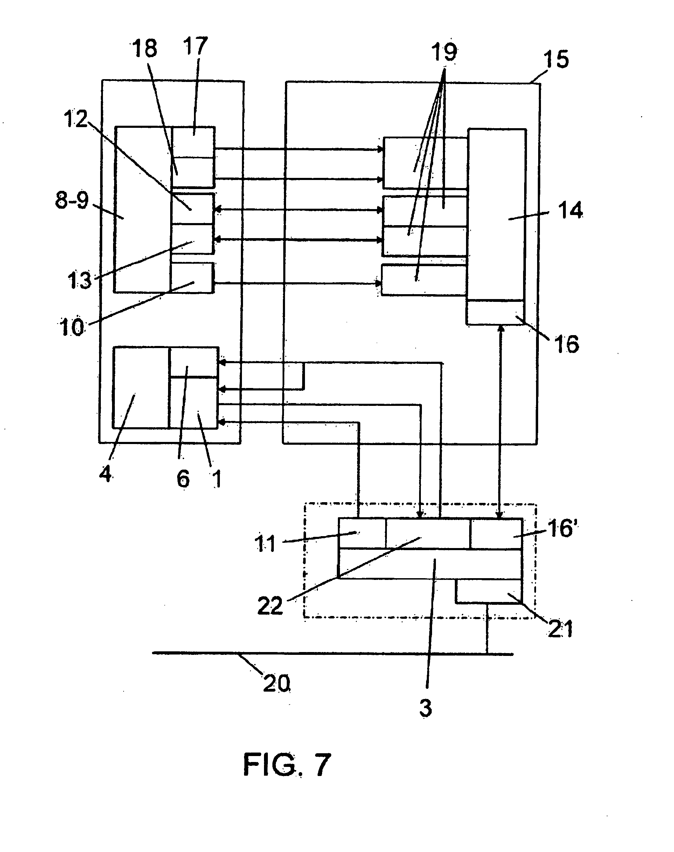

Therefore, as can be seen in figure 7, the camera (1) and strobe lights (6) are monitored by a PC (3), through an image acquisition card (22) and, optionally, through a serial port (11), while the horizontal and vertical movements of the slide bars (8) and (9) by means of respective electric motors (12) and (13) are monitored by a programmable micro-controller or automaton (14) arranged in a control cabinet (15), related through the respective serial ports (16-16'), LAN or similar to said PC, and to the motors (12-13), end of path sensors (17), the ultrasound sensor (10) and anomaly or emergency sensors (18), through the corresponding entrances (19).

Therefore, each image is processed by applying different thresholding procedures and calculation of the statistics of the proportion of oxide stains found is based on the different sizes thereof within a certain band section of configurable length (typically between one and ten metres). This system does not require storage of all the images but only some (normally one) for every section for monitoring purposes and by way of example. The result of the system is the calculation of the proportion of oxide stains found in terms of size in every longitudinal band section.

Finally, we must point out that the computer (3) may be connected to a local data network (20) through a LAN port (21) in order to transmit the processed information to other PCs.

Although the present description has been made on the basis of the fact that spacing between the camera (1) and the surface to be examined is carried out by moving the carriage (9) associated to the box (4), said carriage may optionally not be externally attached to the box (4) but rather internally, in such a manner that it only affects the vertical movement of said camera (1), maintaining the box (4) vertically immovable.

## Claims

1. Device for detecting and classifying residual oxide in metal sheet production lines, allowing the automatic detection of residual oxide stains around 50µm in size by means of statistical sampling on highly reflective metal surfaces, in addition to classification thereof in metal sheet production lines in a totally automated manner and without the need to stop said production line during the detection and classification process, **characterised in that** it comprises:
a framework (4) fixed to a slide bar (8) equipped with a motor (12) that allows it to move horizontally, sideways to the forward movement of the metal sheet (2) and to a carriage (9) for moving said framework (4) in a vertical direction, in such a manner that, on the basis of sheet movement speed and the synchronised sideways movement of the slide bar (8), a zigzag statistical sampling of the metal sheet (2) surface is achieved;
a high-resolution CCD video camera (1) arranged inside the framework;
an ultrasound sensor (10) arranged on said framework (4) and configured to detect the distance between the framework (4) and the surface being inspected allowing to modify the vertical distance of the camera (1) with respect to the metal sheet surface to be examined in such a manner that the camera is at the same distance from said surface;
high-power strobe lights (6) arranged inside the framework;
a light diffuser (7) arranged inside the framework for diffusing the light generated by said strobe lights (6) on the surface whereon said camera (1) focuses;
a computer (3) for receiving the video signal and processing each image obtained to detect and classify residual oxide stains, having envisaged that the strobe lights (6) are triggered by the end of processing of the preceding image and that the movement of said framework (4) is monitored by a programmable micro-controller or automaton (14), also associated to said computer (3) through communication ports (16-16'), wherein said computer (3) also monitors the strobe lighting and the acquisition of each image by the CCD video camera (1).

2. Device according to claim 1, wherein the framework (4) is hermetically sealed by means of practicable panels (5), in order to prevent dust from entering therein, having on the lower base thereof a window equipped with a glass opposite the lens of the camera (1).

## Patentansprüche

1. Einrichtung zur Erfassung und Klassifizierung von Restoxid in BlechProduktionslinien, so dass es die automatische Erkennung von Restoxid-Flecken rund 50µm in der Größe durch statistische Stichproben auf stark reflektierenden Metalloberflächen ermöglicht. Zusätzlich zur Einstufung davon in Blechproduktionslinien in einer völlig automatisierten Weise und ohne die Notwendigkeit, diese Produktionslinie während der Erkennung und Klassifizierung zu stoppen, **dadurch gekennzeichnet, dass** es umfasst:
Ein Gerüst (4) an einer Gleitschiene (8) befestigt und mit einem Motor (12) ausgestattet, dass es erlaubt sich horizontal zu bewegen, seitlich zur Vorwärtsbewegung des Metallblechs (2) und zur Beförderung (9) und Bewegen des Gerüsts (4) in vertikaler Richtung, in einer solchen Weise, dass auf der Basis der Blattbewegungsgeschwindigkeit und die seitliche Bewegung der Gleitschiene (8) synchronisiert, eine Zickzack statistische Abtastung der Metallblechs-Oberfläche (2) erreicht wird;
eine hochauflösende CCD-Videokamera (1) eingerichtet innerhalb des Gerüsts;
ein Ultraschallsensor (10), eingerichtet auf dem Gerüst (4) und so eingestellt, um den Abstand zwischen dem Gerüst (4) und der geprüften Oberfläche zu erkennen, so dass die vertikale Entfernung von der Kamera (1) in Bezug auf die zu untersuchten Metallblechoberfläche geändert werden kann, in einer solchen Weise, dass sich die Kamera in der gleichen Entfernung von der Oberfläche befindet;
High-Power-Blitzleuchten (6) eingerichtet innerhalb des Gerüsts;
ein Lichdiffusor (7) eingerichtet innerhalb des Gerüsts zum Ausbreiten des durch Licht erzeugten Blitzleuchten (6) auf der Oberfläche, auf der die Kamera (1) fokussiert;
einen Computer (3) zum Empfangen des Videosignals und Verarbeiten jedes der erhaltenen Bilder um Restoxid-Flecken zu erkennen und klassifizieren, nachdem vorgesehen, dass die Blitzleuchten (6) vom Ende der Verarbeitung des vorhergehenden Bildes eingestellt worden sind und daß die Bewegung des Gerüst (4) durch einen programmierbaren Mikrocontrollers oder Automat (14) überwacht wird, und auch an den Computer (3) durch Verbindungsöffnungen (16-16 ') verbunden, wobei der Computer (3) auch die Blitzleuchten und die Erfassung der durch die durch die CCD-Videokamera (1) aufgenommenen Bilder überwacht.

2. Einrichtung nach Anspruch 1, wobei der Gerüst (4) durch Kunststoffplatten (5) hermetisch abgedichtet ist, um das Eindringen von Staub darin zu verhindern, die auf der unteren Basis davon mit einen Glasfenster gegenüber der Linse der Kamera (1) ausgestattet sind.

## Revendications

1. Dispositif pour la détection et la classification de l'oxyde résiduel dans les lignes de production de feuilles métalliques, permettant la détection automatique des taches résiduelles d'oxyde d'une taille approximative de 50 µm au moyen d'un échantillonnage statistique sur les surfaces métalliques hautement réfléchissantes, en plus de la classification de celles-ci dans les lignes de production de feuilles métalliques d'une manière totalement automatisée et sans avoir à arrêter ladite ligne de production pendant le processus de détection et de classification, **caractérisé en ce qu'**il comprend :
un cadre (4) relié à une barre coulissante (8) équipée d'un moteur (12) qui lui permet de se déplacer horizontalement, latéralement au un mouvement vers l'avant de la feuille métallique (2) et à un chariot (9) pour déplacer ledit cadre (4) dans un sens vertical, de manière à ce que, sur la base de la vitesse de déplacement de la feuille et du mouvement latéral synchronisé de la barre coulissante (8), un échantillonnage statistique en zigzag de la surface de la feuille métallique (2) soit obtenu ;
une caméra vidéo CCD haute résolution (1) disposée à l'intérieur du cadre ;
un capteur d'ultrasons (10) disposé sur ledit cadre (4) et configuré pour détecter la distance entre le cadre (4) et la surface en cours d'inspection permettant de modifier la distance verticale de la caméra (1) par rapport à la surface de la feuille métallique à examiner de manière à ce que la caméra soit à la même distance de ladite surface ;
des lumières stroboscopiques de haute puissance (6) disposées à l'intérieur du cadre ;
un diffuseur de lumière (7) disposé à l'intérieur du cadre pour diffuser la lumière générée par lesdites lumières stroboscopiques (6) sur la surface sur laquelle ladite caméra (1) est braquée ;
un ordinateur (3) pour recevoir le signal vidéo et traiter chaque image obtenue pour détecter et classer les taches résiduelles d'oxyde, après avoir envisagé que les lumières stroboscopiques (6) sont déclenchées à la fin du traitement de l'image précédente et que le mouvement dudit cadre (4) est contrôlé par un microcontrôleur programmable ou un automate (14), également associé audit ordinateur (3) via des ports de communication (16-16'), et dans lequel ledit ordinateur (3) contrôle aussi les lumières stroboscopiques et l'acquisition de chaque image par la caméra vidéo CCD (1).

2. Dispositif selon la revendication 1, dans lequel le cadre (4) est hermétiquement scellé au moyen de panneaux praticables (5), afin d'empêcher la poussière de pénétrer dans celui-ci, ayant à la base inférieure de celui-ci une fenêtre équipée d'un verre en face de la lentille de la caméra (1).
